# DEMANDE DE BREVET EUROPEEN

(11) **EP 4 477 374 A1**
(43) Date de publication de la demande: **18.12.2024**
(21) Numéro de dépôt: 24181700.6
(22) Date de dépôt: 12.06.2024
(51) Int. Cl.: B28B 1/00, B29C 64/106, B29C 64/321, B29C 64/357, E04G 21/04, B33Y 10/00, B33Y 30/00

(54) **SYSTÈME D'IMPRESSION 3D AVEC DÉRIVATION**

(30) Priorité: 13.06.2023 FR 2305987
(71) Demandeur: Saint-Gobain Weber France, 94370 Sucy en Brie (FR)
(72) Inventeur: ESPY, Guillaume, 93300 Aubervilliers (FR); DANGUILLAUME, Frédéric, 93300 Aubervilliers (FR); BOURENNANE, Walid, 93300 Aubervilliers (FR); HARMAND, Nicolas, 93300 Aubervilliers (FR)
(74) Mandataire: Saint-Gobain Recherche

(57) **Abrégé**

La présente invention concerne un système d'impression en trois dimension de matière (1) comprenant un réservoir (20) de matière relié à une tête d'impression (10) par l'intermédiaire d'un conduit principal (40), ledit système comprenant en outre une pompe (50) permettant d'amener ladite matière du réservoir à la tête d'impression, caractérisé en ce que ledit système d'impression comprend en outre des moyens de dérivation (70) agencés au niveau du conduit principal, lesdits moyens de dérivation comprenant un conduit additionnel (702) s'étendant depuis le conduit principal et un premier module vanne (700) agencé entre le conduit principal et le conduit additionnel.

## Description

La présente invention concerne le domaine de l'impression 3D et notamment l'impression 3D de matériau pour la construction.

### Art antérieur

Il est connu l'impression en 3 dimensions de matériau de construction de type béton ou mortier pour concevoir des éléments de constructions ou même des bâtiments. Cette impression en 3D consiste à avoir une cuve de matériau. Une pompe est utilisée pour amener ledit matériau de la cuve vers une tête d'impression. Cette tête d'impression comprend un moyen d'ouverture - fermeture utilisé pour permettre ou bloquer l'impression. Ce moyen d'ouverture-fermeture est utilisé lors de la réalisation d'un objet / bâtiment. En effet, il est parfois nécessaire d'interrompe l'impression lors de la construction afin de former des ouvertures ou pour la réalisation de pièces complexes avec des discontinuités.

L'inconvénient des systèmes existants est que le processus d'arrêt et de redémarrage de l'impression entraîne une mauvaise qualité d'impression. Cette mauvaise qualité est la conséquence du fait que, lors du redémarrage, la pression dans le système d'impression n'est pas instantanément remise à sa valeur de fonctionnement. Il en résulte que le filet de matière déposée durant ce laps de temps n'est pas qualitatif, ses dimensions n'en sont pas conformes aux souhaits c'est-à-dire que le filet de matière est plus fin. Il en résulte une construction qui peut présenter des zones plus fragiles. Il est aussi possible que le filet de matière ne soit pas qualitatif à cause d'une d'un surplus de matière.

Il existe des systèmes d'impression en trois dimensions qui ont des moyens permettant le start/stop comportant une vis dans la tête d'impression. En actionnant ou stoppant cette vis, il est possible d'arrêter/reprendre plus facilement le dépôt. En effet, cette vis va soit transporter le matériau, soit le cisailler pour lui permettre de s'écouler.

L'inconvénient de ces solutions est qu'elles sont complexes car elles comprennent un nombre important de pompes et de vis. Or, la complexification de la tête d'impression augmente la sensibilité de ladite tête d'impression aux risques d'un blocage par le matériau. Par ailleurs cela augmente le poids de la tête d'impression, donc la charge du robot.

### Résumé de l'invention

La présente invention concerne cherche à résoudre les problèmes de l'art antérieur en fournissant un système d'impression qui permet de garder un flux contant de sortie lors de pause dans ladite impression.

A cet effet, l'invention concerne un système d'impression en trois dimension de matière comprenant un réservoir de matière connecté à une tête d'impression par l'intermédiaire d'un conduit principal, ledit système comprenant en outre une pompe permettant d'amener ladite matière du réservoir à la tête d'impression, la tête d'impression comprend des moyens de fermetures/ouvertures pour permettre l'impression de matière, caractérisé en ce que ledit système d'impression comprend en outre des moyens de dérivation agencés au niveau du conduit principal, lesdits moyens de dérivation comprenant un conduit additionnel s'étendant depuis le conduit principal et un premier module vanne agencé entre le conduit principal et le conduit additionnel.

Selon un exemple, un second module vanne est agencé entre le conduit principale et la tête d'impression.

Selon un exemple, le système d'impression comprend en outre un troisième module vanne agencé au niveau du conduit principal à proximité immédiate de la première module vanne.

Selon un exemple, la première module vanne et la troisième module vanne sont intégrées dans une seule pièce.

Selon un exemple, la première module vanne comprend un tube droit fixé par une extrémité au conduit principale et par une seconde extrémité au conduit additionnel, ce tube comprenant une vanne.

Selon un exemple, le premier module vanne comprend une pièce tubulaire avec trois branches deux extrémités sont connectés au conduit principal, une extrémité connectée au conduit additionnel, la module vanne étant agencée dans la portion connecté au conduit additionnel.

Selon un exemple, le conduit additionnel s'étend entre le conduit principal et un récipient.

Selon un exemple, le récipient est le réservoir contenant le mélange à imprimer.

Selon un exemple, le système d'impression comprend en outre une unité de calcul envoyant des signaux de commande à ou aux modules vanne.

L'invention concerne en outre un procédé de gestion d'un système d'impression selon l'invention, dans lequel ledit procédé comprend une phase d'impression dans laquelle les moyens de fermetures /ouvertures sont ouverts pour permettre l'impression de matière et le premier module vanne est fermé et une phase de pause dans laquelle les moyens de fermetures /ouvertures sont ferlés et le premier module vanne est ouvert.

Selon un exemple, un second module vanne est agencé entre le conduit principale et la tête d'impression, ledit second module vanne étant ouvert lors de la phase d'impression et fermé lors de la phase de pause.

Selon un exemple, un troisième module vanne agencé au niveau du conduit principal à proximité immédiate de la première module vanne, ledit troisième module vanne étant ouvert lors de la phase d'impression et fermé lors de la phase de pause.

Selon un exemple, le passage d'une phase d'impression à une phase de pause se fait en agissant simultanément sur la totalité des modules vanne et le passage d'une phase de pause à une phase d'impression se fait par action sur le premier module vanne et le troisième module vanne simultanément, l'action sur le second module vanne étant différé d'un laps de temps défini.

### Description des dessins

D'autres particularités et avantages ressortiront clairement de la description qui en est faite ci-après, à titre indicatif et nullement limitatif, en référence aux dessins annexés, dans lesquels :
- la figure 1 représente une vue d'un système d'impression selon l'invention;
- la figure 2 représente un schéma du système d'impression selon l'invention;
- la figure 3 représente un schéma de la dérivation du système d'impression selon l'invention;
- les figure 4 et 5 représentent des configurations du premier module vanne du système d'impression selon l'invention;
- les figure 6 à 8 représentent des variantes du système d'impression selon l'invention;
- la figure 9 représente une variante du premier module vanne et du troisième module vanne du système d'impression selon l'invention;

### Description détaillée

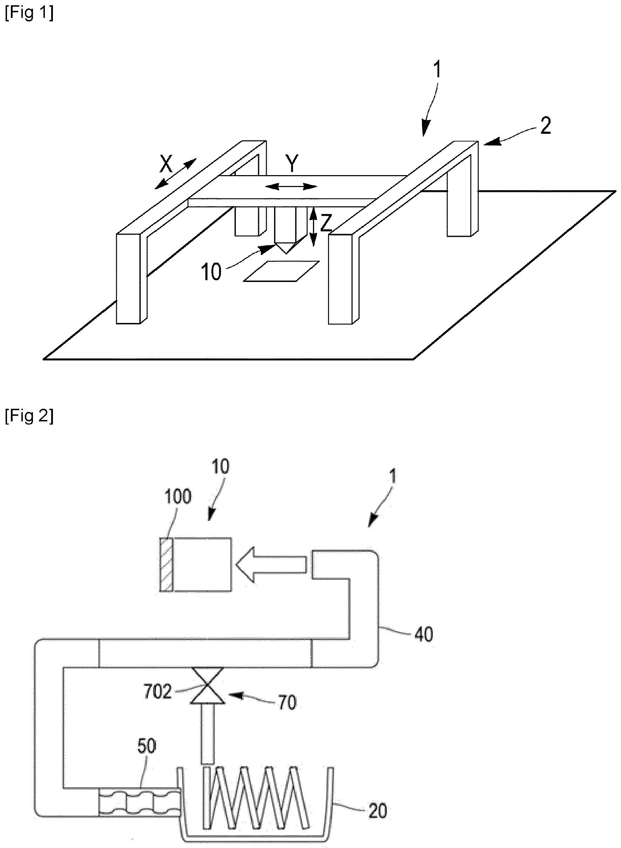

A la figure 1, un système d'impression 1 de matière en trois dimensions est représenté. Le système d'impression 1 est utilisé pour réaliser un objet de construction comme une brique ou un parpaing ou pour réaliser directement un bâtiment. Le système d'impression 1 comprend une tête d'impression 10 par laquelle la matière est déposée. La tête d'impression 10 est montée sur une structure 2 permettant à ladite tête d'impression de se déplacer selon au moins trois axes longueur, largeur et hauteur pour procéder à ladite impression. Cette structure peut se présenter sous la forme d'un bras articulé ou de portiques.

La tête d'impression 10, visible à la figure 2, est reliée à un réservoir 20 par l'intermédiaire d'un conduit appelé conduit principal 40. Le réservoir 20 est un réservoir dans lequel la mixture servant pour l'impression est stockée. Le réservoir 20 est aussi appelé mélangeur lorsqu'il est muni de moyens pour mélanger la mixture comme une vis sans fin ou des pales rotatives.

Le système d'impression 1 comprend en outre une pompe 50 permettant d'amener le mélange du réservoir 20 vers la tête d'impression 10.

La tête d'impression 10 comprend, de préférence, des moyens d'ouverture-fermeture ou d'obturation 100 comme par exemple un clapet ou une vanne permettant au mélange de sortir de la tête d'impression 10 et d'être déposée.

Ainsi, l'impression se fait en pompant le mélange depuis le réservoir vers la tête d'impression 10 tout en déplaçant ladite tête selon un chemin programmé pour réaliser l'objet.

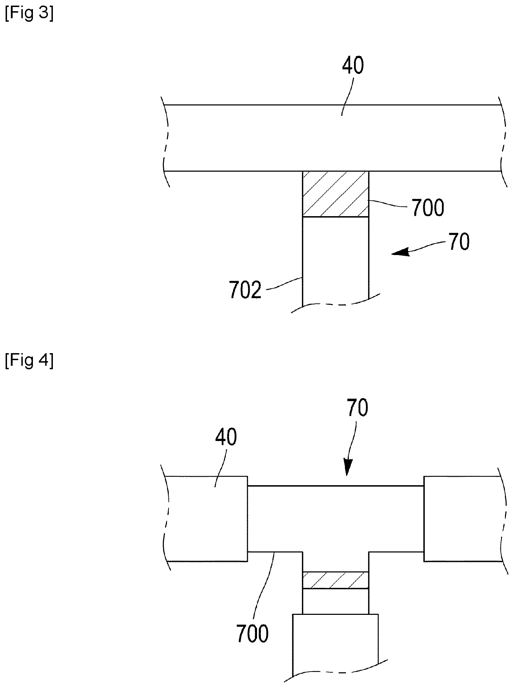

Selon l'invention visible à la figure 3, le système d'impression 10 comprend des moyens de dérivation 70. Ces moyens de dérivation 70 comprennent un premier module vanne 700 et un conduit additionnel 72. Ce premier module vanne 700 est agencé entre le conduit principal 40 et le conduit additionnel 72, ledit premier module vanne 700 permettant le transfert du mélange du conduit principal 40 vers le conduit additionnel 702. Le conduit additionnel est ainsi une sortie vers un récipient.

Dans une première configuration visible à la figure 4, le premier module vanne 700 se présente sous la forme d'un connecteur en T. Ce connecteur en T, une pièce tubulaire, présente une branche coaxiale avec le conduit principale 40 et une branche perpendiculaire. Cette branche perpendiculaire comprend une vanne.

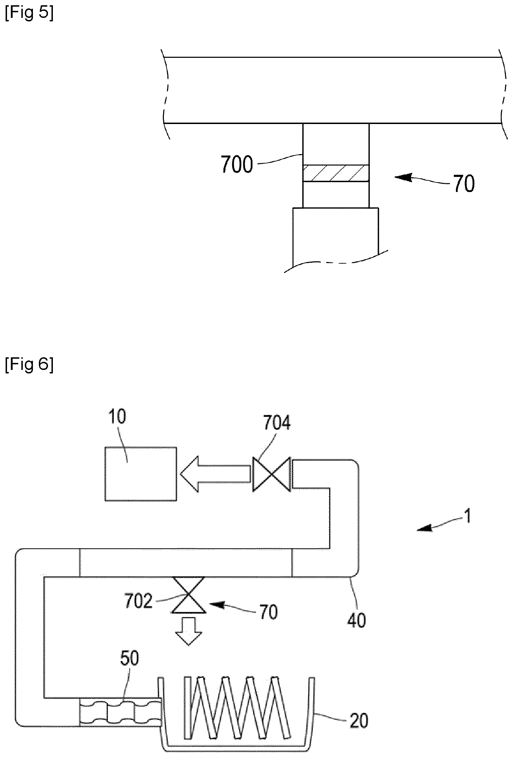

Dans une seconde configuration visible à la figure 5, le premier module vanne 700 se présente sous la forme d'un connecteur droit qui comprend la vanne. Ce connecteur droit, sous la forme d'un tube, est inséré dans une ouverture du conduit principal.

Dans le système d'impression, un second module vanne 704 est agencé.

Dans un premier mode de réalisation, les moyens d'ouverture - fermeture 100 sont utilisés comme module vanne au niveau de la sortie aussi appelé seconde module vanne 704 comme visible à la figure 2.

Le fonctionnement du système consiste, lors d'une mise à l'arrêt du système, notamment lors d'une pause dans l'impression pour réaliser une ouverture dans l'objet à fabriquer à agir sur les modules vannes selon une séquence définie.

En fonctionnement, le second module vanne 704 est ouvert afin que la matière du réservoir soit imprimée. Le première module vanne 700 est fermé.

Cette séquence consiste à agir de façon synchronisée sur le premier module vanne 700 et le second module vanne 704 pour ouvrir le première module vanne 700 et fermer le second module vanne 704. Cette action synchrone permet de créer une recirculation du mélange dans le conduit principal 40 et le conduit additionnel 72 vers le récipient. Contrairement à un arrêt définitif du système, la mise en pause du système d'impression s'accompagne d'un fonctionnement continue de la pompe 50 amenant le mélange du réservoir vers la tête d'impression 10. La pression est ainsi maintenue constante.

Lors du redémarrage de l'impression, le premier module vanne 700 est fermé. Cette fermeture permet de rétablir la pression dans l'intégralité du conduit principal. Une fois cette pression rétablie, le second module vanne 704 des moyens d'ouverture - fermeture est ouvert afin que l'impression puisse reprendrez avec une qualité d'impression optimale.

Le laps de temps entre l'ouverture du premier module vanne 700 et l'ouverture du second module vanne 704 est de l'ordre de 0.5 à 3s. Ce laps de temps est variable selon la valeur de pression souhaitée dans ledit conduit principal.

Dans un second mode de réalisation visible à la figure 6, le second module vanne 704 est dissocié des moyens d'ouverture - fermeture 100. On comprend par la que les moyens d'ouverture - fermeture 100 comprennent un clapet ou une vanne et que le second module vanne 704 est agencé au niveau du conduit principal. Ce second module vanne 704 est agencé en léger amont de la tête d'impression, de préférence, elle fait l'interface entre le conduit principal et la tête d'impression. Ce second module vanne consiste en un connecteur droit. Il est en outre possible, avec ce second mode de réalisation, que la tête d'impression ne comprenne pas de moyens d'ouverture - fermeture 100.

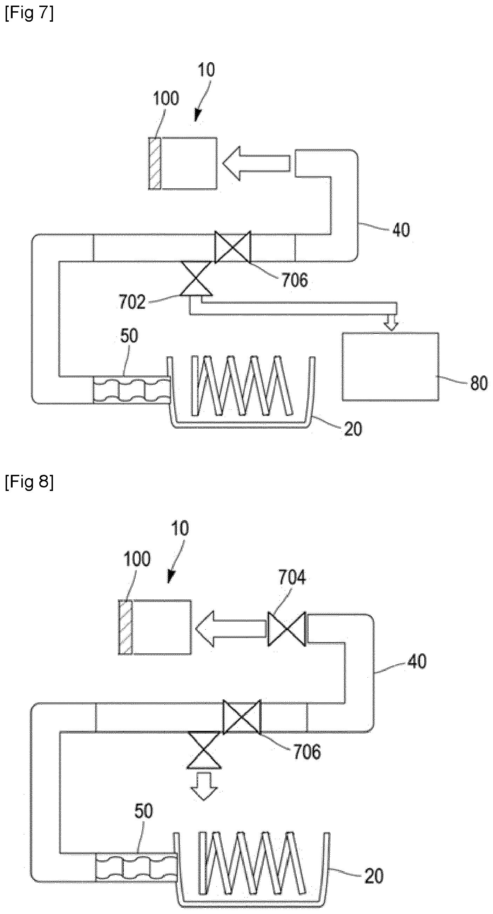

Dans une première variante visible aux figures 7 et 8, le système d'impression 1 comprend en outre un troisième module vanne 706. Ce troisième module vanne 706 est agencé au niveau du conduit principal 40. Ce troisième module vanne 706 consiste en un connecteur droit agencé dans le conduit principal 40. Lors d'une mise en pause du système d'impression, ce troisième module vanne 706 est fermé simultanément à l'ouverture du premier module vanne 700. Cette fermeture permet d'isoler le conduit principal 40 entre le troisième module vanne 706 et le second module vanne 704. Lors du redémarrage de l'impression, le troisième module vanne est ouvert en même temps que le premier module vanne est fermée.

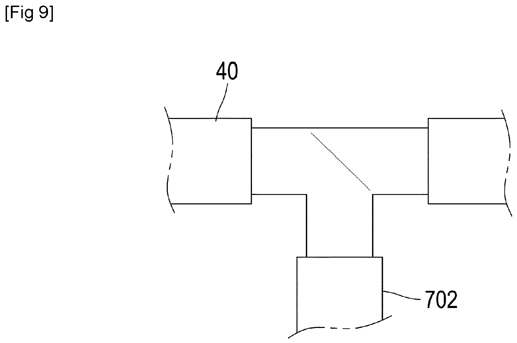

Dans une alternative à cette première variante comme visible à la figure 9, le troisième module vanne et le second module vanne sont remplacés par un module vanne unique. Ce module vanne unique consiste en un connecteur en T ou module vanne à trois voies. Dans cette configuration, la voie 1 est reliée au mélangeur, la voie 2 à la tête d'impression et la voie 3 au conduit additionnel. Ce module vanne unique à un fonctionnement dans lequel une action sur ledit module vanne permet de diriger le flux de la voie 1 vers la voie 2 ou de la voie 1 vers la voie 3.

Dans les différentes configurations, les module vannes 700, 704, 706 sont commandés par un contrôleur et par des actionneurs qui permettent d'agir sur les modules vannes électriquement.

Dans une variante, le conduit additionnel 702 est agencé pour faire la liaison entre le conduit principal et le réservoir dans lequel le mélange est stocké comme visible à la figure 2. On comprend alors que le récipient est le mélangeur. Cette variante permet d'avoir une recirculation du mélange lors d'une pause de l'impression.

Dans une alternative, le conduit additionnel est agencé pour faire la liaison entre le conduit principal et un réservoir additionnel 80 comme visible à la figure 7. Ce réservoir additionnel, différent du réservoir dans lequel le mélange se trouve, est utilisé afin de récupérer le mélange non utilisé ou souillé.

Le système d'impression selon l'invention est commandé par une unité de calcul. Cette unité de calcul incorpore les plans de l'objet à fabriquer ou est connecté à un appareil du type ordinateur dans lequel les plans sont stockés. Cette unité de calcul est agencée pour envoyer des signaux aux différentes éléments dudit système d'impression pour permettre ladite impression. L'unité de calcul envoie ainsi des signaux vers le mélangeur, la pompe, la tête d'impression et la structure permettant à ladite tête d'impression de se déplacer. L'unité de calcul envoie en outre des signaux vers le ou les modules vanne pour les ouvrir ou les fermer.

Bien entendu, la présente invention ne se limite pas à l'exemple illustré mais est susceptible de diverses variantes et modifications qui apparaîtront à l'homme de l'art.

## Revendications

1. Système d'impression en trois dimension de matière (1) comprenant un réservoir (20) de matière relié à une tête d'impression (10) par l'intermédiaire d'un conduit principal (40), ledit système comprenant en outre une pompe (50) permettant d'amener ladite matière du réservoir à la tête d'impression, **caractérisé en ce que** ledit système d'impression comprend en outre des moyens de dérivation (70) agencés au niveau du conduit principal, lesdits moyens de dérivation comprenant un conduit additionnel (702) s'étendant depuis le conduit principal et un premier module vanne (700) agencé entre le conduit principal et le conduit additionnel.

2. Système d'impression selon la revendication précédente, dans lequel un second module vanne (704) est agencé.

3. Système d'impression selon la revendication précédente, dans lequel le second module vanne (704) est agencé entre le conduit principale et la tête d'impression.

4. Système d'impression selon la revendication 2, dans lequel, le second module vanne (704) comprend des moyens de fermetures /ouvertures (100) la agencés dans la tête d'impression.

5. Système d'impression selon l'une des revendications précédentes, dans lequel il comprend en outre un troisième module vanne (706) agencé au niveau du conduit principal à proximité immédiate de le premier module vanne.

6. Système d'impression selon la revendication précédente dans lequel le premier module vanne et le troisième module vanne sont intégrés dans une seule pièce.

7. Système d'impression selon l'lune des revendications précédentes, dans lequel le première module vanne comprend un tube droit fixé par une extrémité au conduit principale et par une seconde extrémité au conduit additionnel, ce tube comprenant une vanne.

8. Système d'impression selon l'lune des revendications 1 à 6, dans lequel le première module vanne comprend une pièce tubulaire avec trois branches, deux extrémités sont connectées au conduit principal, une extrémité connectée au conduit additionnel, ledit premier module vanne comprenant en outre une vanne agencée dans la branche connectée au conduit additionnel.

9. Système d'impression selon l'une des revendications précédentes, dans lequel le conduit additionnel s'étend entre le premier module vanne et un récipient.

10. Système d'impression selon la revendication précédente, dans lequel le récipient est le réservoir contenant le mélange à imprimer.

11. Système d'impression selon l'une des revendications précédentes dans lequel il comprend en outre une unité de calcul envoyant des signaux de commande à ou aux modules vanne.

12. Procédé de gestion d'un système d'impression selon la revendication 1, dans lequel ledit procédé comprend une phase d'impression dans laquelle les moyens de fermetures /ouvertures sont ouverts pour permettre l'impression de matière et le premier module vanne est fermé et une phase de pause dans laquelle les moyens de fermetures /ouvertures sont fermés et le premier module vanne est ouvert.

13. Procédé de gestion d'un système d'impression selon la revendication précédente, dans lequel un second module vanne est agencé entre le conduit principale et la tête d'impression, ledit second module vanne étant ouvert lors de la phase d'impression et fermé lors de la phase de pause.

14. Procédé de gestion d'un système d'impression selon l'une des revendications 10 ou 11, dans lequel un troisième module vanne agencé au niveau du conduit principal à proximité immédiate du premier module vanne, ledit troisième module vanne étant ouvert lors de la phase d'impression et fermé lors de la phase de pause.

15. Procédé de gestion d'un système d'impression selon la revendication 14, dans laquelle le passage d'une phase d'impression à une phase de pause se fait en agissant simultanément sur la totalité des modules vanne et le passage d'une phase de pause à une phase d'impression se fait par action sur le premier module vanne et le troisième module vanne simultanément, l'action sur le second module vanne étant différé d'un laps de temps défini.
